# EUROPÄISCHE PATENTANMELDUNG

(11) **EP 0 539 612 A1**
(43) Veröffentlichungstag der Anmeldung: **05.05.1993**
(21) Anmeldenummer: 91118298.8
(22) Anmeldetag: 26.10.1991
(51) Int. Cl.: G01B 15/02, G01N 23/223, G01N 23/203

(54) **Verfahren zur kontinuierlichen Abstandsmessung eines beschichteten Trägermaterials zu einer die Material-Beschichtungsstärke messenden Einrichtung**

(71) Anmelder: FAG Kugelfischer Georg Schäfer Aktiengesellschaft, D-97419 Schweinfurt (DE)
(72) Erfinder: Woydig, Sieghard, W-8522 Herzogenaurach (DE)
(74) Vertreter: Rehmann, Klaus H.

(57) **Zusammenfassung**

Verfahren zur kontinuierlichen Abstandsmessung eines beschichteten Trägermaterials zu einer die Material-Beschichtungsstärke messenden Einrichtung, wobei das beschichtete Trägermaterial mittels eines Americium Strahlers zur material-charakteristischen Fluoreszent angeregt wird und mittels eines Filters der Teil der Strahlung absorbiert wird, der von der Ordnungszahl des beschichteten Trägermaterials abhängig ist, so daß mittels einer mit Krypton oder Xenon gefüllten Ionisationskammer die Comptonstrahlung des Trägermaterials gemessen werden kann, die ein Maß für den Abstand darstellt.

## Beschreibung

Die Erfindung betrifft ein Verfahren zur kontinuierlichen Abstandsmessung eines beschichteten Trägermaterials zu einer die Material-Beschichtungsstärke messenden Einrichtung.

Für eine derartige Abstandsmessung sind verschiedene Verfahren, die mittels kapazitiver oder induktiver Wegsensoren, Ultraschall- oder Lasersonden arbeiten, bekannt. Alle diese Verfahren ergeben genaue Meßwerte und arbeiten zufriedenstellend so lange die Sensoren oder Sonden in einer ihre Funktion nicht beeinträchtigenden Betriebsumgebung betrieben werden können. Eine erhebliche Beeinträchtigung erfahren diese Sensoren bzw. Sonden jedoch bei einem Einsatz in Galvannealing-Prozessen.

Galvannealing-Prozesse sind Verfahren bei denen durch nachträgliches induktives Aufheizen eines verzinkten Stahlbandes auf ca. 500 bis 600° C Eisen in die Zinkschicht diffundiert, so daß intermetallische Verbände zwischen Zink und Eisen gebildet werden. Dieser intermetallische Verband ist für die Weiterverarbeitbarkeit des beschichteten Stahls und das Haftverhalten der Zinkschicht von außerordentlich großer Bedeutung.

Durch die induktive Erhitzung des beschichteten Trägermaterials scheiden kapazitive Abstandsmeßverfahren aus. Induktive Wegsensoren müssen in unmittelbarer Nähe der induktiven Erwärmungsvorrichtung angeordnet werden und werden durch diese Vorrichtung so stark beeinträchtigt, daß keine genauen Abstandsmaße ermittelt werden können. Lasersonden scheiden wegen der nichtdifusen Reflektion induktiv erhitzter, spiegelnder Oberflächen und Ultraschallsonden aufgrund von Turbulenzen der heißen Luftumgebung aus.

Die Erfindung hat sich die Aufgabe gestellt ein Verfahren zur kontinuierlichen Abstandsmessung eines beschichteten Trägermaterials zu einer die Material-Beschichtungsstärke messenden Einrichtung zu schaffen, welches unabhängig von der Art des Beschichtungsverfahrens eine genaue Abstandsmessung gewährleistet.

Die Aufgabe wird erfindungsgemäß durch die Merkmale des Hauptanspruchs gelöst.

Der Gegenstand der Erfindung geht davon aus, daß jede Strahlungsart durch Materialien höherer Ordnungszahl reflektiert wird.

Metallbleche sind als Reflektoren besonders geeignet und die Rückstreuintensität kann bei günstigem Einstrahlungswinkel bis zu 60 % der direkten Strahlungsintensität betragen.

Bei jedem vor einer Ionisationskammer angebrachten Strahler gibt es in einer bestimmten Entfernung ein Maximum der Rückstreuintensität.

Ist der Abstand zu klein, ist der Streuwinkel ungünstig, da die Rückstreuenergie im Strahler selbst und dessen Fassung absorbiert wird. Ist der Abstand zu groß nimmt die Strahlungsintensität durch das bekannte Abstandsgesetz ab.

Weiche Beta Strahler haben, da sie stärker streuen, ein Maximum bei einem Abstand zum bestrahlten Trägermaterial von ca. 11 mm, härtere Beta Strahler von ca. 20 mm und Gama Strahler von ca. 30 mm Abstand.

Das Rückstreusignal bildet, wenn auf der Abszisse der Abstand, beispielsweise in Millimeter und auf der Ordinatenachse die Intensität der Comptonstrahlung aufgetragen ist, eine Exponentialfunktion ähnlich einer Hyperbel.

Bei der Zn-Schichtmessung im Galvannealing Prozess ist ein Abstand der Meßeinrichtung vom Trägermaterial von 50 bis 60 mm erwünscht und dabei wird die Comptonstrahlung eines Americium 241 Strahlers genutzt, so daß die Comptonstrahlung die Energie der schwächer gebundenen Elektronen des Atoms nutzt, welche mit ca. 50 KeV etwas niedriger ist als die Primärenergie mit ca. 62 KeV.

Diese Meßwerte, welche auch als elektrische Signale vorliegen, werden in an sich bekannter Weise so elektronisch aufbereitet, daß sie Steuerungen des Prozeßablaufes vornehmen.

## Patentansprüche

1. Verfahren zur kontinuierlichen Abstandsmessung eines beschichteten Trägermaterials zu einer die Material-Beschichtungsstärke messenden Einrichtung, dadurch gekennzeichnet, daß das beschichtete Trägermaterial mittels eines an sich bekannten Americium Strahlers, zur material-charakteristischen Fluoreszent angeregt, wobei mittels eines Filters der Teil der Strahlung absorbiert wird, der von der Ordnungszahl des beschichteten Trägermaterials abhängig ist, und mittels einer mit Krypton oder Xenon gefüllten Ionisationskammer die Comptonstrahlung des Trägermaterials gemessen wird, so daß aus der Intensität dieser Comptonstrahlung in einer an sich bekannten elektronischen Signalverarbeitungs-Einrichtung das Abstandsmaß errechbar ist.
